(19) Europäisches Patentamt
European Patent Office
Office européen des brevets

(11) **EP 4 339 324 A1**

(12) **EUROPÄISCHE PATENTANMELDUNG**

(43) Veröffentlichungstag:
**20.03.2024 Patentblatt 2024/12**

(21) Anmeldenummer: 22196330.9

(22) Anmeldetag: **19.09.2022**

(51) Internationale Patentklassifikation (IPC):
*C23C 22/12* (2006.01)   *C23C 22/62* (2006.01)
*C23C 22/78* (2006.01)   *C22C 38/02* (2006.01)
*C22C 38/04* (2006.01)   *C22C 38/06* (2006.01)

(52) Gemeinsame Patentklassifikation (CPC):
**C23C 22/12; B32B 15/012; C21D 7/13;
C22C 38/02; C22C 38/04; C22C 38/06;
C22C 38/24; C22C 38/26; C22C 38/28;
C22C 38/32; C23C 2/12; C23C 2/26; C23C 22/78**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **ThyssenKrupp Steel Europe AG
47166 Duisburg (DE)**

(72) Erfinder:
• **Köyer, Maria
44141 Dortmund (DE)**
• **Junge, Fabian
46485 Wesel (DE)**

(74) Vertreter: **ThyssenKrupp Steel Europe AG
Patente/Patent Department
Kaiser-Wilhelm-Straße 100
47166 Duisburg (DE)**

(54) **STAHLFLACHPRODUKT MIT EINER AKTIVIERUNGSSCHICHT FÜR DIE WARMUMFORMUNG**

(57)  Die vorliegende Erfindung betrifft ein aktiviertes Stahlflachprodukt umfassend ein Stahlsubstrat und einen Korrosionsschutzüberzug. Die Aktivierungsschicht auf der Oberfläche beinhaltet Phosphor, Natrium und Titan, wobei $P \geq 2xTi$, $P \geq Na$ und $Ti \leq Na$. Des Weiteren betrifft die Erfindung ein warmumgeformtes Bauteil, hergestellt aus dem aktivierten Stahlflachprodukt. Der Schichtaufbau des Korrosionsschutzüberzuges auf dem Stahlsubstrat (1) des erfindungsgemäßen warmumgeformten Bauteils besteht aus einer Legierungsschicht (2), einer Al-Basisschicht (3) und Si-reichen Phasen (4), die sind nicht miteinander verbunden sind und in der Al-Basisschicht (3) eingebettet sind. Auf der Oberfläche befindet sich eine Oxidschicht mit Phosphor (6). Optional kann das warmumgeformte Bauteil anschließend phosphatiert werden.

Figur 2

EP 4 339 324 A1

**Beschreibung**

Die Erfindung betrifft ein aktiviertes Stahlflachprodukt mit einem Aluminium-Silizium (AS) Korrosionsschutzüberzug, sowie ein Bauteil, das aus dem Stahlflachprodukt mittels Warmumformung hergestellt wird.

Wenn nachfolgend von einem "Stahlflachprodukt" oder auch von einem "Blechprodukt" die Rede ist, so sind damit Walzprodukte, wie Stahlbänder oder -bleche, gemeint aus denen für die Herstellung von beispielsweise Karosseriebauteilen "Blechzuschnitte" (auch Platinen genannt) abgeteilt werden. "Blechformteile" oder "Blechbauteile" der erfindungsgemäßen Art sind aus derartigen Blechzuschnitten hergestellt, wobei hier die Begriffe "Blechformteil" und "Blechbauteil" synonym verwendet werden.

In der vorliegenden Anmeldung sind alle Angaben zu Gehalten bezüglich der Stahlzusammensetzung auf das Gewicht bezogen, sofern nicht ausdrücklich anders erwähnt. Alle nicht näher bestimmten, im Zusammenhang mit einer Stahllegierung stehenden "%-Angaben" sind daher als Angaben in "Gew.-%" zu verstehen.

Werden in der vorliegenden Anmeldung von Elementgehalten in Phasen gesprochen so werde diese mittels Rasterelektronenmikroskopie (REM) und Energiedispersiver Röntgenspektroskopie (EDX) bestimmt. Die Angaben werden ebenfalls in "Gew.-%" gemacht. Die Si-reichen Phasen werden im Querschliff des Korrosionsschutzüberzuges durch Bestimmung des Siliziumgehaltes mittels Punkt- oder Flächenscans bestimmt. Um die Durchgängigkeit einer Phasenschicht zu bestimmen, werden mindestens 3 Lichtmikroskopische- und/oder REM-Aufnahmen ausgewertet. Der für die Lichtmikroskopischen- und/oder REM-Aufnahmen gewählte Bildausschnitt wird so gewählt, dass mindestens der gesamte metallische Überzug von der Oberfläche bis zum Stahlsubstrat zu erkennen ist. Hierzu wird auf einem REM-Bild der Anteil der Phase parallel zur Oberfläche und parallel zur Querschliffoberfläche vermessen. Hierzu wird eine Gerade parallel zur Oberfläche auf das REM-Bild gelegt. Um die Durchgängigkeit der Phase zu bestimmen, wird das Verhältnis der Gesamtlänge der Gerade innerhalb der Phase zur Gesamtlänge der Gerade bestimmt. Die Gerade parallel zur Oberfläche wird so gelegt, dass sich der maximale Wert des Verhältnisses ergibt. Dieser maximale Wert des Verhältnisses wird als Durchgängigkeit der Phase bezeichnet.

Gehalte von Elementen auf der Oberfläche werden in der vorliegenden Erfindung mittels Glimmentladungsspektroskopie (GD-OES) bestimmt. Die Gehalte werden in Gewicht immer in Bezug auf die Fläche angegeben, auf der sie gemessen wurden, d.h. mg/m$^2$.

Im Folgenden werden die Martensitstarttemperatur und die AC1- und AC3-Temperatur definiert. Die Martensitstarttemperatur eines im Rahmen der erfindungsgemäßen Vorgaben liegenden Stahls ist gemäß der Formel:

$$Ms\,[°C] = (490{,}85 - 302{,}6\,\%C - 30{,}6\,\%Mn - 16{,}6\,\%Ni - 8{,}9\,\%Cr + 2{,}4\,\%Mo - 11{,}3\,\%Cu + 8{,}58\,\%Co + 7{,}4\,\%W - 14{,}5\,\%Si)\,[°C/Gew.\text{-}\%]$$

zu berechnen, wobei hier mit C% der C-Gehalt, mit %Mn der Mn-Gehalt, mit %Mo der Mo-Gehalt, mit %Cr der Cr-Gehalt, mit %Ni der Ni-Gehalt, mit %Cu der Cu-Gehalt, mit %Co der Co-Gehalt, mit %W der W-Gehalt und mit %Si der Si-Gehalt des jeweiligen Stahls in Gew.-% bezeichnet sind.

Die AC1-Temperatur und die AC3-Temperatur eines im Rahmen der erfindungsgemäßen Vorgaben liegenden Stahls ist gemäß den Formeln:

$$AC1\,[°C] = (739 - 22*\%C - 7*\%Mn + 2*\%Si + 14*\%Cr + 13*\%Mo - 13*\%Ni + 20*\%V)\,[°C/Gew.\text{-}\%]$$

$$AC3\,[°C] = (902 - 225*\%C + 19*\%Si - 11*\%Mn - 5*\%Cr + 13*\%Mo - 20*\%Ni + 55*\%V)\,[°C/Gew.\text{-}\%]$$

zu berechnen, wobei auch hiermit mit %C der C-Gehalt, mit %Si der Si-Gehalt mit %Mn der Mn-Gehalt mit %Cr der Cr-Gehalt, mit %Mo der Mo-Gehalt, mit %Ni der Ni-Gehalt und mit +%V der Vanadium-Gehalt des jeweiligen Stahls bezeichnet sind (Brandis H 1975 TEW-Techn. Ber. 1 8-10)

Der im Folgenden angegebene Bedeckungsgrad wird mittels Rasterelektronenmikroskop (REM) bestimmt. Hierzu wird an mindestens 5 verschiedenen Positionen von der Oberfläche ein REM-Bild mit der Größe von 200 μm*150 μm aufgenommen. Auf dieses Bild wird jeweils ein Raster in horizontaler und vertikaler Richtung mit 1 μm Schritten gelegt. Für jedes entstandene Kästchen wird die Belegung mit Partikeln bestimmt. Ist die Belegung > 50 % wird das Kästchen als belegt gezählt, ist die Belegung ≤50% wird das Kästchen als nicht belegt gezählt. Der Bedeckungsgrad wird nun bestimmt aus (belegtes Kästchen) / (Gesamtzahl aller Kästchen)) und in "%" angegeben.

Um die im modernen Karosseriebau geforderte Kombination aus geringem Gewicht, maximaler Festigkeit und Schutzwirkung zu bieten, werden heutzutage in den Bereichen der Karosserie, die im Fall eines Crashs besonders hohen Belastungen ausgesetzt sein können, Bauteile eingesetzt, die aus hochfesten Stählen warmumgeformtwerden. Beim Warmumformen, auch Warmpresshärten genannt, werden Stahlplatinen (auch als Blechzuschnitte bezeichnet), die zuvor von kalt- oder warmgewalztem Stahlband abgeteilt werden, auf eine Verformungstemperatur erwärmt, die im Allgemeinen oberhalb der Austenitisierungstemperatur des jeweiligen Stahls liegt, und im erwärmten Zustand in das Werkzeug einer Umformpresse gelegt. Im Zuge der anschließend durchgeführten Umformung erfährt der Blechzuschnitt bzw. das aus ihm geformte Bauteil durch den Kontakt mit dem kühlen Werkzeug eine schnelle Abkühlung. Die Abkühlraten sind dabei so eingestellt, dass sich im Bauteil ein Härtegefüge (d.h. martensitisches Gefüge) ergibt.

Um die warmumgeformten Bauteile vor Korrosion zu schützen sind unter anderem Korrosionsschutzüberzüge aus Aluminium und Silizium bekannt, die mittels Schmelztauchbeschichtung aufgebracht werden. WO 2015/036151 A1 offenbart ein Verfahren zur Herstellung eines mit einem metallischen, vor Korrosion schützenden Überzug versehenen Stahlbauteils und ein entsprechendes Stahlbauteil. Das Verfahren gemäß diesem Dokument umfasst das Beschichten eines Stahlflachproduktes mit einer Legierung aus Aluminium, Zink, Magnesium und gegebenenfalls Silizium und Eisen, Schneiden einer Platine aus dem Stahlflachprodukt, Erwärmen der Platine und Umformen der Platine, um das gewünschte Stahlbauteil zu erhalten.

Damit das beschichtete Stahlflachprodukt warmumgeformt werden kann, muss das Stahlflachprodukt in einer bestimmten Geschwindigkeit auf eine Solltemperatur gebracht werden. Um das beschichtete Stahlflachprodukt auf diese Ausgangstemperatur für die Warmumformung zu bringen ist aus WO2012/120081 bekannt auf der Oberfläche eine zusätzliche Beschichtung bestehend aus 5-50 % aus einer Oxid-, Nitrid-, Sulfat-, Sulfid-, Carbid-, Carbonat-, Fluorid-, Hydrat-, Hydroxid- oder Phosphat-Verbindung eines unedlen Metalls, sowie zu 1 - 20 % aus einem Binder und als Rest aus Wasser aufzubringen. Durch die Beschichtung kann das Stahlflachprodukt in verkürzter Erwärmungsgeschwindigkeit auf die Ausgangstemperatur gebracht werden. Um die entsprechende Wirkung zu erreichen, muss nach WO2012/120081 allerdings eine große Menge an kristallinen Partikeln auf der Oberfläche abgeschieden werden. Dadurch entsteht ein wenig ressourcensparender Prozess und außerdem können die großen kristallinen Partikel auf der Oberfläche eine mögliche Phosphatierung nach der Warmumformung behindern.

Aufgabe der vorliegenden Erfindung ist demnach ein Stahlflachprodukt zur Verfügung zu stellen, welches in einer höheren Erwärmungsgeschwindigkeit auf Ausgangstemperatur gebracht werden kann, wofür aber ein geringer Ressourceneinsatz notwendig ist. Außerdem muss die Anzahl und Größe der Partikel auf der Oberfläche begrenzt sein, um keine negative Beeinträchtigung bei einem anschließenden optionalen Phosphatierungsschritt zu haben.

Gelöst wird die Aufgabe mittels eines aktivierten Stahlflachprodukts umfassend ein Stahlsubstrat und einen Korrosionsschutzüberzug, wobei das Stahlsubstrat neben Eisen und unvermeidbaren Verunreinigungen aus

| | |
|---|---|
| C: | 0,04 % - 0,45 % |
| Mn: | 0,5 % - 2,6 % |
| Si: | 0,02 % - 1,2 % |
| Al: | 0,02 - 1,0 % |
| P: | ≤ 0,05 % |
| S: | ≤ 0,02 % |

sowie optional einem oder mehreren der folgenden Elemente mit den Gehalten:

| | |
|---|---|
| Ti: | 0,01 % - 0,08 % |
| Nb: | 0,02% - 0,08 % |
| B: | 0,001 % - 0,005 % |
| Cr: | 0,08 % bis zu 1,0 % |
| Mo: | ≤ 0,5 % |
| Ni: | ≤ 0,5 % |
| Cu: | ≤0,2 % |
| V: | ≤0,1 % |

besteht, und wobei der Korrosionsschutzüberzug auf Aluminium-Basis ist und eine Legierungsschicht und eine Al-Basisschicht aufweist gekennzeichnet dadurch, dass sich eine Aktivierungsschicht bestehend aus Phosphor, Natrium und Titan sich auf der Oberfläche befinden und für Ihre Gehalte gilt:

| P: | $\geq 2xTi$ |
| P: | $\geq Na$ |
| Ti: | $\leq Na$ |

Für den erfindungsgemäßen Gegenstand hat sich gezeigt, dass durch die aufgebrachte Aktivierungsschicht sich bei der Warmumformung eine erhöhte Aufheizgeschwindigkeit bei der Erwärmung auf die Ausgangstemperatur einstellt. Dies wird bewirkt durch eine andere Wärmeeinkopplung der Schicht. Die Aktivierungsschicht umfassend die entsprechenden Phosphor-, Titan- und Natriumverhältnisse sorgt dafür, dass mit einem geringen Ressourceneinsatz gearbeitet werden kann. Außerdem ist sichergestellt, dass nicht zu große Partikel in der Aktivierungslösung auf der Oberfläche entstehen. Im Folgenden wird der erfindungsgemäße Gegenstand genauer erläutert.

Kohlenstoff ("C") ist zu mindestens 0,04% im erfindungsgemäßen Stahl enthalten und trägt zur Härtbarkeit des Stahls bei, in dem die Ferrit-und Bainitbildung verzögert sowie der Restaustenit im Gefüge verzögert wird. In einer bevorzugten Ausführung, um die Vorteile des Kohlenstoffs sicher nutzen zu können, hat sich ein Anteil von 0,07 %, besonders bevorzugt 0,10 % gezeigt. Ein zu hoher Kohlenstoffgehalt kann dazu führen, dass die Schweißeigenschaften des Stahlflachproduktes sich verschlechtern, daher wird der Kohlenstoffgehalt erfindungsgemäß auf 0,45 %, bevorzugt auf 0,4 % und besonders bevorzugt auf 0,25 % begrenzt.

Durch Mangan ("Mn") Zugabe wird die Ferrit-und Bainitbildung im Stahlflachprodukt verzögert. Um einen möglichst geringen Anteil von Ferrit und Bainit beim Abkühlen nach der Warmumformung zu erhalten hat sich eine Zugabe von 0,5 % als vorteilhaft erwiesen. In einer bevorzugten Variante kann ein Mangangehalt von mindestens gleich 0,8%, besonders bevorzugt 1,0 % dem Stahlflachprodukt hinzugefügt werden. Bei zu hohen Mangangehalten verschlechtert sich die Verarbeitbarkeit des Stahls, daher ist der Mangangehalt auf 2,6 % begrenzt. Insbesondere um die Schweißeigenschaften zu verbessern, sollte der Mangangehalt auf bevorzugt auf 1,6 % und besonderes bevorzugt auf 1,30 % begrenzt sein.

Silizium ("Si") führt zur Mischkristallverfestigung am warmumgeformten Produkt und somit zu einer weiteren Erhöhung der Härtbarkeit. Hierzu hat sich ein erfindungsgemäßer Anteil von mindestens 0,02 % als geeignet herausgestellt. Als besonders vorteilhaft um die Härtbarkeit einzustellen hat sich ein Anteil von mindestens 0,06 % und besonders bevorzugt von mindestens 0,10 % herausgestellt. Ein zu hoher Siliziumgehalt im Stahlflachprodukt kann eine nachteilige Auswirkung auf die Beschichtbarkeit haben. Daher wird erfindungsgemäß der Siliziumgehalt auf 1,2 %, bevorzugt 1,1 % besonders bevorzugt 0,9% begrenzt.

Aluminium "Al" kann dem Stahl als Deoxidationsmittel hinzugegeben. Hierzu wird dem Stahl 0,02 % und bevorzugt 0,03 % Aluminium hinzugegeben. Ein zu hoher Aluminiumgehalt kann allerdings die AC3 Temperatur nach oben verschieben und erschwert somit die Warmumformung. Daher hat es sich als vorteilhaft herausgestellt den Aluminiumgehalt auf 1,0 %, bevorzug 0,5 % und besonders bevorzugt auf 0,1 % zu begrenzen.

Phosphor ("P") und Schwefel ("S") sind Verunreinigungen im Stahlflachprodukt, welche durch Eisenerz entstehen. Ziel ist es die Gehalte so gering wie möglich zu halten, da mechanische Eigenschaften durch einen zu hohen Gehalt negativ beeinträchtigt werden können. Zu diesem Zweck ist der Phosphorgehalt in der vorliegenden Erfindung auf 0,05 %, bevorzugt auf 0,03 %, begrenzt. Der Schwefelgehalt sollte der Erfindung gemäß höchstens gleich 0,02 % sein.

Neben der Verunreinigung durch Schwefel und Phosphor können noch weitere Elemente als Verunreinigungen im Stahlflachprodukt auftreten. Diese weiteren Elemente werden als "unvermeidbare Verunreinigungen" zusammengefasst. Der Gehalt an diesen unvermeidbaren Verunreinigungen beträgt bevorzugt in Summe maximal 0,2 % und besonders bevorzugt 0,1 %.

Für die nachfolgend beschriebenen optionalen Legierungselemente Ti, Nb, B, Cr, Mo, Ni, Cu und V, für die eine Untergrenze angegeben ist, können auch Gehalte unterhalb der jeweiligen Untergrenze als Verunreinigungen im Stahlflachprodukt vorkommen. In diesem Fall zählen sich auch zu den "unvermeidbaren Verunreinigungen".

Die Elemente Aluminium, Titan, Niob, Bor, Chrom, Molybdän, Nickel, Kupfer und Vanadium können dem Stahl des erfindungsgemäßen Stahlflachprodukts jeweils einzeln oder in Kombination optional hinzulegiert werden.

Ein optionales hinzufügen von Titan "Ti" kann dazu führen, dass die Kornfeinung verbessert wird. Hierzu kann eine optionale Zugabe von mindestens 0,01 % helfen. Der Titangehalt sollte auf 0,8% begrenzt sein, da zu hohe Titangehalte die Kaltwalzbarkeit und die Rekristallisierbarkeit negativ beeinträchtigen.

Niob "Nb" beeinflusst die Kornfeinung während der Austenitisierung im Warmumformprozess. Dafür hat es sich als vorteilhaft herausgestellt mindestens 0,02 % Nb dem erfindungsgemäßen Stahl hinzuzufügen. Allerdings führt Niob zu einer verschlechterten Rekristallisierbarkeit. Daher beträgt der maximale Niob-Gehalt 0,08 %, bevorzugt 0,06 %.

Bor "B" wird hinzulegiert, um die Härtbarkeit des Stahlflachproduktes zu verbessern. Der Effekt tritt auf bei einem Borgehalt von 0,001 %, bevorzugt 0,002 % auf. Bei zu hohen Borgehalten können sich Bornitride bzw. Borkarbide bilden, daher ist der Borgehalt auf maximal 0,005 %, bevorzugt 0,004 % begrenzt.

Chrom "Cr" wird dem Stahl hinzugeben um ein vollständige Martensitbildung bei geringen Abkühlraten zu ermöglich, in dem die Ferrit- und Perlitbildung unterdrückt wird. Der positive Effekt von Chrom kann bei Gehalten von 0,08 %, bevorzugt 0,18 %, genutzt werden. Bei zu hohen Chromgehalten wird allerdings die Beschichtbarkeit des Stahls negativ beeinflusst. Daher ist der maximale Chromgehalt auf 1,0 %, bevorzugt auf 0,5 % begrenzt.

Molybdän "Mo" kann optional auch dazu genutzt werden die Ferritbildung zu unterdrücken, da Molybdän die Phasenumwandlung durch Karbidbildung an den Korngrenzen verlangsamt und durch die Absenkung der Korngrenzenergie die Nukleationsrate von Ferrit verringert. Die Wirkung tritt ab einem Gehalt von mindestens gleich 0,002 % ein. Auf Grund der hohen Kosten des Elements Molybdän sollte der maximale Gehalt auf 0,5 % begrenzt sein.

Dem Stahl kann optional Nickel "Ni" hinzugefügt werden. Das optionale Hinzufügen von mindestens gleich 0,01 % Nickel führt zu einer Absenkung der AC3 Temperatur und hilft die Bildung von Bainit und Ferrit zu unterdrücken. Aus ökonomischen Gründen sollte der maximale Nickelgehalt auf 0,5 %, insbesondere 0,20 % beschränkt sein,

Kupfer "Cu" kann optional mit einem Gehalt von mindestens 0,01 % hinzulegiert werden, um die Härtbarkeit zu erhöhen. Beschränkt werden sollte der maximale Cu-Gehalt auf höchstens 0,2 %, bevorzugt 0,1 %, da sich die Warmwalzeigenschaften bei zu hohen Kupfergehalten verschlechtern.

Vanadium "V" kann optional mit mindestens 0,001 % hinzulegiert werden. Maximal wird der Vanadiumgehalt aus Kostengründen auf 0,1 % beschränkt.

Das Stahlflachprodukt ist mit einem Korrosionsschutzüberzug versehen, welcher auf Aluminium-Basis ist und eine Legierungsschicht und eine Al-Basisschicht aufweist.

Ein solcher Korrosionsschutzüberzug wird bevorzugt durch Schmelztauchbeschichten des Stahlflachproduktes erzeugt. Dabei wird das Stahlflachprodukt durch eine flüssige Schmelze geführt, die aus 3-15 % Silizium (Si), bevorzugt mehr als 7-12 % (Si), besonders bevorzugt 9-12 % (Si), sowie bis zu 4,0 % Eisen (Fe), bevorzugt 1-3,5 % Fe, besonders bevorzugt 2-3,5 % Fe, bevorzugt 0,2-0,4 % Magnesium, und optional bis zu 15 % Zink (Zn), bevorzugt bis zu 10 % Zn und optionalen weiteren Bestandteilen, deren Gehalte in Summe auf höchstens 2,0 % beschränkt sind, und als Rest Aluminium besteht.

Die Dicke des auf dem Stahlflachprodukt aufgebrachten Korrosionsschutzüberzuges beträgt typischerweise 10-40 μm je Seite. Das Auflagengewicht beträgt typischerweise 30-100 g/m², bevorzugt 40-80 g/m² je Seite.

Beim Schmelztauchbeschichten diffundiert Eisen aus dem Stahlsubstrat in den flüssigen Überzug, so dass der Korrosionsschutzüberzug des Stahlflachproduktes beim Erstarren insbesondere eine Legierungsschicht und eine Al-Basisschicht aufweist.

In einer besonderen Ausführungsform ist das erfindungsgemäße aktivierte Stahlflachprodukt gekennzeichnet dadurch, dass die Legierungsschicht aus

| | |
|---|---|
| Fe: | 35 %-90 % |
| Si: | 0,1 %-10 %, |

optional bis zu 0,5 % Mg
und optionalen weiteren Bestandteilen, deren Gehalte in Summe auf höchstens 2,0 % beschränkt sind, und als Rest Aluminium besteht
und die Al-Basisschicht aus

| | |
|---|---|
| Si: | 1,0-15 % |

und optional

| | |
|---|---|
| Fe: | 1-4 % |
| Mg: | bis zu 0,7 % |
| Zn: | bis zu 15 % |

und optionalen weiteren Bestandteilen, deren Gehalte in Summe auf höchstens 2,0 % beschränkt sind, und als Rest Aluminium besteht.

Die Legierungsschicht liegt auf dem Stahlsubstrat auf und auf der Legierungsschicht grenzt die Al-Basisschicht an. Durch die Diffusion von Eisen in den Überzug, ist Eisen in der Legierungsschicht angereichert und die Legierungsschicht besteht aus mindestens 35 % Eisen. Der maximale Gehalt von Eisen in der Legierungsschicht beträgt 90 %, bevorzugt 55 %. Der Siliziumgehalt in der Legierungsschicht beträgt mindestens 0,1 % und maximal 10 %. Optional kann die Legierungsschicht Magnesium enthalten. Der Gehalt von Magnesium sollte auf 0,5 % begrenzt sein. Als besonders vorteilhaft hat sich ein Magnesiumgehalt von mindestens 0,1 % herausgestellt. Des Weiteren besteht die Legierungsschicht optional aus weiteren Bestandteilen, deren Gehalt höchstens 2,0 % beschränkt sind und als Rest Aluminium.

Die optionalen weiteren Bestandteile beinhalten insbesondere die optionalen Bestandteile der Schmelze z.B.: Zink.

Die Al-Basisschicht grenzt an die Legierungsschicht unmittelbar an. Bevorzugt entspricht die Zusammensetzung der Al-Basisschicht der Zusammensetzung der Schmelze. Diffusionsvorgänge können allerdings zu abweichenden Gehalten führen. Der Siliziumgehalt in der Al-Basisschicht beträgt mindestens 1,0 %, bevorzugt 7,0 %, besonders bevorzugt 9,0 %. Der maximale Siliziumgehalt beträgt 15 %, bevorzugt 12 %, besonders bevorzugt 10 %. Optional kann der Anteil von Eisen in der Al-Basisschicht 1 %, bevorzugt 2 % betragen. Maximal sollte der Anteil von Eisen auf 4 %, besonders bevorzugt 3,5 %, beschränkt sein. Des Weiteren kann Magnesium in Anteilen bis zu 0,7 %, bevorzugt 0,4 % in der Al-Basisschicht enthalten sein. In einer besonderen Ausführung ist der minimale Anteil von Magnesium in der Al-Basisschicht 0,2 %. Zusätzlich kann in der Al-Basissicht Zink mit einem maximalen Anteil von 15 % enthalten sein, optional weitere Bestandteile, deren Gehalte in Summe auf höchstens 2,0 % beschränkt sind und als Rest Aluminium.

Zur Lösung der Aufgabe wird das erfindungsgemäße Stahlflachprodukt aktiviert. Dies äußert sich am Stahlflachprodukt darin, dass auf dem Korrosionsschutzüberzug eine Aktivierungslösung aufgebracht wurde und dadurch eine Aktivierungsschicht entsteht. Die Aktivierungsschicht besteht unter anderem aus Phosphor. Der Phosphor kann in einer besonderen Ausführung in Form von Titanphosphaten z.B.: Natriumtitanylphosphaten vorliegen. Phosphorverbindungen können dazu führen, dass das Stahlflachprodukt später in der Weiterverarbeitung beim Aufheizen zur Ausgangstemperatur für die Warmumformung in einer kürzeren Aufheizzeit gebracht werden kann, da die Wärmeeinkopplung durch die Phosphorverbindungen optimiert ist. Für den Phosphorgehalt in der Aktivierungsschicht auf der Oberfläche hat sich ein Gehalt von mindestens 1 mg/m$^2$ als bevorzugt herausgestellt. In einer besonders bevorzugten Alternative wurde festgestellt, dass der Gehalt mindestens 4 mg/m$^2$ betragen sollte. Die Anzahl der aufgebrachten Phosphatverbindungen soll hierfür möglichst gering sein um ressourcenschonend zu arbeiten. Daher sollte in einer bevorzugten Variante der Anteil höchstens 100 mg/m$^2$, bevorzugt 50 mg/m$^2$, besonders bevorzugt 20 mg/m$^2$ begrenzt sein. Außerdem können bei einer großen Anzahl von Phosphatverbindungen später auf dem Bauteil große kristalline Phosphatkörner entstehen, die in einem weiteren optionalen Phosphatierungsschritt störend sein können. Nichtsdestotrotz müssen die Phosphatverbindungen so beschaffen sein, dass die positive Wirkung der verringerten Aufheizzeit bestehen bleibt. In der Aktivierungsschicht auf der Oberfläche des erfindungsgemäßen Stahlflachprodukts werden hierfür die Anteile von Phosphor, Natrium und Titan auf der Oberfläche im Verhältnis zu Titan mit $P \geq 2 \cdot Ti$, $P \geq Na$, $Ti \leq Na$ eingestellt. In einer besonderen Ausführungsform gilt für die Anteile von Phosphor und Titan auf der Oberfläche zueinander $P \geq 3 \cdot Ti$, insbesondere $P \geq 5 \cdot Ti$.

Trotz des bereits geringen Ressourceneinsatzes an Phosphorpartikeln, d.h. einen geringen Feststoffanteil, bildet die Aktivierungsschicht auf dem erfindungsgemäßen Stahlflachprodukt eine nahezu geschlossene Schicht aus mit einem Bedeckungsgrad von mindestens 30 %, bevorzugt 50 %, besonders bevorzugt 80 % aus.

Durch die eingestellten Verhältnisse in der Aktivierungsschicht und der nahezu geschlossenen Schicht kann eine Verbesserung der Aufheizrate erreicht werden.

Das beschriebene aktivierte Stahlflachprodukt wird mittels eines Verfahrens hergestellt, dass die folgenden Schritte umfasst:

a) Bereitstellen eines Stahlsubstrats mit erfindungsgemäßer Zusammensetzung;

b) Schmelztauchbeschichten des Stahlsubstrats mit einem Korrosionsschutzüberzug auf Aluminium-Basis, wobei der Korrosionsschutzüberzug eine Legierungsschicht und eine Al-Basisschicht aufweist;

c) Dressieren des Stahlflachproduktes;

d) Optionales Reinigen des Stahlflachproduktes;

e) Applizieren einer Aktivierungslösung auf das Stahlflachprodukt, bevorzugt tauchen, spritzen, sprühen oder Coil Coating;

f) Optional alkalisches Reinigen des Stahlflachproduktes.

In Arbeitsschritt a) wird ein erfindungsgemäßes Stahlsubstrat mit der vorgegebenen Legierung zur Verfügung gestellt. Das Stahlsubstrat wird mittels konventioneller Methoden hergestellt. Eine mögliche Ausführungsform ist die folgende:
Hierzu wird zunächst eine Bramme oder Dünnbramme zur Verfügung gestellt, die mittels Brammenstrangguss oder Dünnbrammenstrangguss erzeugt werden kann. Dies Bramme oder Dünnbramme wird durchwärmt, optional vorgewalzt, warmgewalzt und optional gehaspelt. Dann wird das Stahlsubstrat entzundert, optional kaltgewalzt und optional geglüht.

In Arbeitsschritt b) wird das Stahlsubstrat mit einem Korrosionsschutzüberzug schmelztauchbeschichtet. Bevorzugt findet die Schmelztauchbeschichtung in einem kontinuierlichen Prozess statt.

In Arbeitsschritt c) wird das Stahlflachprodukt dressiert, um die Oberflächenrauigkeit zu verbessen. Erfindungsgemäß werden Dressiergrade von bis zu 2 % erreicht.

In Arbeitsschritt d) wird das Stahlflachprodukt optional gereinigt. Insbesondere kann dies mit Auftrag einer alkalischen Lösung durchgeführt werden, bevorzugt wird dieser Auftrag durch Spritzen und/oder Tauchen durchgeführt. Eine weitere Ausführungsform ist das Stahlflachprodukt durch Bürsten zu reinigen.

In Arbeitsschritt e) wird die Aktivierungslösung auf das Stahlflachprodukt aufgebracht. In einer bevorzugten Ausführungsform kann die Aktivierungslösung mittels tauchen, spritzen, sprühen oder Coil Coating aufgebracht werden. Das Aufbringen der Aktivierung dauert bevorzugt insbesondere maximal 60 s und minimal 5 s und wird bevorzugt bei Raumtemperatur durchgeführt. In einer besonderen Ausführungsform hat die Aktivierungslösung eine Temperatur von mindestens 15° C. Insbesondere sollte die Temperatur 25° C nicht überschreiten, da ansonsten auf der Oberfläche des Stahlflachprodukts weitere nicht erwünschte Oxidationsprozesse stattfinden. Die aufgebrachte Aktivierungslösung ist eine Aktivierungspartikel umfassende wässrige Lösung. In einer bevorzugten Ausführung beträgt der Anteil von Wasser im Lösungsmittel mindestens 95 Gew.-%. Dadurch ist eine gleichmäßige Verteilung der Aktivierungspartikel auf der Oberfläche gewährleistet.

In einer besonderen Ausführungsform ist die Aktivierungslösung eine Aktivierungspartikel umfassende wässrige Lösung, wobei die Aktivierungspartikel Titanphosphat umfassen.

In einer bevorzugten Variante besitzt die Aktivierungslösung einen pH-Wert >7.

Die Aktivierungsleistung wird durch die Aktivierungsbadkonzentration bestimmt. Die Aktivierungsbadkonzentration ist definiert durch die Masse an Aktivierungspartikeln in Gew.-% in Volumen der Lösung. Um den Ressourceneinsatz zu reduzieren, sollte die Aktivierungsbadkonzentration begrenzt sein. Die Aktivierungsbadkonzentration ist bevorzugt kleiner 100 g/l, bevorzugt kleiner 70 g/l, besonders bevorzugt kleiner 50 g/l beträgt. Minimal sollte die Aktivierungsbadkonzentration mindestens 10 g/l betragen.

Als Aktivierungsmittel werden kommerziell verfügbare Mittel verwendet, wie z.B.: SurTec 145 / 610V / 615V / 616V von Surtec, Fixodine X / 950 / 50 / G3039 / 5020 / 79114 / 9112 / Bonderite M-AC 50 CF von Henkel oder Gardolene V 6599 / 6560A / 6559 / 6526 / 6522 / 6520 / 6518 / 6513/5176/6411.

In einer bevorzugten Variante sind die Aktivierungspartikel teilweise amorph und teilweise auskristallisiert. Der Anteil der amorphen Partikel an allen Partikeln beträgt >50 %, bevorzugt >65 % besonders bevorzugt >80 %. Dies führt dazu, dass auf der Oberfläche in den späteren Verfahrensschritten der Warmumformung keine großen kristallisierten Partikel auf der Oberfläche entstehen, die Störfaktoren bei weiteren möglichen Verfahrensschritten wie weiteres Phosphatieren und Lackieren sein können. In einer bevorzugten Variante bestehen die Aktivierungspartikel aus einer Matrix, die aus amorphen Partikeln besteht, in die Aktivierungskeime eingebettet sind. Diese Aktivierungskeime sind dadurch gekennzeichnet, dass sie in ihrer Größe kleiner sind als die amorphen Partikel. Als Größe wird hier einen Durchschnitt der Partikel bestimmt mittels Transmissionselektronenmikroskop. Um eine gute Wirkung auf die Aufheizgeschwindigkeit zu erreichen, hat sich gezeigt, dass es sich in einer besonderen Ausführung bei den Aktivierungskeimen um nanokristalline Keime handelt, d.h. die Keime sind <100 nm, besonders bevorzugt <10 nm. Die amorphen Partikel auf der Oberfläche haben eine Größe von mindestens 10 $\mu$m, bevorzugt mindestens 100 $\mu$m, besonders bevorzugt mindestens 500 $\mu$m. Bestimmt wird die Größe der amorphen Partikel mittels dynamischer Laserbeugung im Aktivierungsbad, aus dem anschließend die Aktivierungslösung hergestellt wird und auf die Oberfläche aufgetragen wird.

Aus dem aktivierten Stahlflachprodukt kann ein warmumgeformtes Bauteil hergestellt werden. Hierzu sind die folgenden Verfahrensschritte notwendig:

a) Bereitstellen eines Blechzuschnitts aus einem zuvor beschriebenen Stahlflachprodukt;

b) Erwärmen des Blechzuschnitts derart, dass zumindest teilweise die AC3 Temperatur des Zuschnitts überschritten ist und die Temperatur $T_{Einlg}$ des Zuschnitts beim Einlegen in ein für ein Warmpressformen vorgesehenes Umformwerkzeug (Arbeitsschritt c)) zumindest teilweise eine Temperatur oberhalb von Ms+100°C aufweist, wobei Ms die der Martensitstarttemperatur bezeichnet;

c) Einlegen des erwärmten Blechzuschnitts in ein Umformwerkzeug, wobei die für das Entnehmen aus der Erwärmungseinrichtung und das Einlegen des Zuschnitts benötigte Transferdauer $t_{Trans}$ höchstens 20 s, bevorzugt höchstens 15 s, beträgt;

d) Warmpressformen des Blechzuschnitts zu dem Blechformteil, wobei der Zuschnitt im Zuge des Warmpressformens über eine Dauer $t_{WZ}$ von mehr als 1 s mit einer zumindest teilweise mehr als 30 K/s betragenden Abkühlgeschwindigkeit $r_{WZ}$ auf die Zieltemperatur $T_{Ziel}$ abgekühlt und optional dort gehalten wird;

e) Entnehmen des auf die Zieltemperatur abgekühlten Blechformteils aus dem Werkzeug.

Zur Herstellung des erfindungsgemäßen warmumgeformten Bauteils wird das unter Arbeitsschritt a) bereitgestellte Stahlflachprodukt in Arbeitsschritt b) zumindest teilweise auf AC3 Temperatur erwärmt. Außerdem muss die Temperatur $T_{Einlg}$ des Zuschnitts beim Einlegen in ein für ein Warmpressformen vorgesehenes Umformwerkzeug (Arbeitsschritt c)) zumindest teilweise eine Temperatur oberhalb von Ms+100°C beträgt. Unter teilweisem Überschreiten einer Temperatur (hier AC3 bzw. Ms+100°C) wird im Sinne dieser Anmeldung verstanden, dass mindestens 30 %, insbesondere mindestens 60 %, des Volumens des Zuschnitts eine entsprechende Temperatur überschreiten. Beim Einlegen in das Umformwerkzeug weist also mindestens 30 % des Zuschnitts ein austenitisches Gefüge auf, d.h. die Umwandlung vom ferritischen ins austenitische Gefüge muss beim Einlegen in das Umformwerkzeug noch nicht abgeschlossen sein. Vielmehr können bis zu 70 % des Volumens des Zuschnitts beim Einlegen in das Umformwerkzeug aus anderen Gefügebestandteilen, wie angelassenem Bainit, angelassenem Martensit und/oder nicht bzw. teilweise rekristallisiertem Ferrit bestehen. Zu diesem Zweck können bestimmte Bereiche des Zuschnitts während der Erwärmung gezielt auf einem niedrigeren Temperaturniveau gehalten werden als andere. Hierzu kann die Wärmezufuhr gezielt nur auf bestimmte Abschnitte des Zuschnitts gerichtet werden oder die Teile, die weniger erwärmt werden sollen, gegen die Wärmezufuhr abgeschirmt werden. In dem Teil des Zuschnittmaterials, dessen Temperatur niedriger bleibt, entsteht im Zuge der Umformung im Werkzeug kein oder nur deutlich weniger Martensit, so dass das Gefüge dort deutlich weicher ist als in den jeweils anderen Teilen, in denen ein martensitisches Gefüge vorliegt. Auf diese Weise kann im jeweils geformten Blechformteil gezielt ein weicherer Bereich eingestellt werden, indem beispielsweise eine für den jeweiligen Verwendungszweck optimale Zähigkeit vorliegt, während die anderen Bereiche des Blechformteils eine maximierte Festigkeit besitzen.

Maximale Festigkeitseigenschaften des erhaltenen Blechformteils können dadurch ermöglicht werden, dass die zumindest teilweise im Blechzuschnitt erreichte Temperatur zwischen AC3 und 1000 °C, bevorzugt zwischen 850 °C und 950 °C liegt.

Eine optimal gleichmäßige Eigenschaftsverteilung lässt sich dadurch erreichen, dass der Zuschnitt im Arbeitsschritt b) vollständig durcherwärmt wird.

Bei einer bevorzugten Ausführungsvariante beträgt die mittlere Aufheizgeschwindigkeit $r_{Ofen}$ des Blechzuschnittes beim Erwärmen in Schritt b) mindestens 3 K/s, bevorzugt mindestens 5 K/s, insbesondere mindestens 7,5 K/s, bevorzugt mindestens 9 K/s. Die mittlere Aufheizgeschwindigkeit $r_{Ofen}$ ist dabei als mittlere Aufheizgeschwindigkeit von 20 °C auf 700 °C zu verstehen.

Die Aufheizgeschwindigkeit ist insbesondere von der Blechdicke abhängig. Daher ist in einer bevorzugten Ausführungsvariante das Produkt aus Aufheizgeschwindigkeit und Blechdicke in dem Temperaturbereich 20° C bis 700 °C größer gleich 5 (K*mm) /s, bevorzugt größer gleich 8 (K*mm) /s, besonders bevorzugt größer gleich 11 (K*mm) /s.

Durch die aufgetragene Aktivierungslösung auf dem verwendeten Stahlsubstrat erhöht sich das Produkt aus mittlerer Aufheizgeschwindigkeit und Blechdicke im Vergleich zu einem nicht aktivierten Stahlsubstrat. Dieser Effekt tritt durch die Phosphatverbindungen auf der Oberfläche ein, welche die Wärmeeinkopplung positiv verändern. Durch den Erwärmungsschritt in Schritt b) werden aber auch Kristallisierungsprozesse der amorphen Partikel auf der Oberfläche des Stahlflachproduktes gestartet. Dadurch ist für diesen Kristallisierungsprozess kein nasschemischer Prozessschritt mehr notwendig. Durch das Gemisch der Aktivierungslösung aus amorphen Anteilen und kristallinen Aktivierungskeimen, sorgen die Aktivierungskeime in Schritt b) nun zur Bildung von Zinkphosphaten auf der Oberfläche. Durch den begrenzten Anteil des unedlen Metalls in der Aktivierungslösung und den Anteil der amorphen Partikel auf der Oberfläche, kommt es aber in diesem Erwärmungsschritt nicht zu großen Zinkphosphatpartikeln auf der Oberfläche. In einer bevorzugten Variante ist daher die durchschnittliche Größe der Zinkphosphate auf der Oberfläche auf <50 $\mu$m, bevorzugt <10 $\mu$m, besonders bevorzugt <5 $\mu$m begrenzt.

Bevorzugt beträgt der Taupunkt im Ofen bei dem Warmumformschritt mindestens -20 °C, bevorzugt mindestens -15 °C, insbesondere mindestens -5 °C, besonders bevorzugt mindestens 0 °C, insbesondere mindestens 5 °C und maximal +25 °C, bevorzugt maximal + 20 °C insbesondere maximal +15 °C. In einer besonderen Ausführung besteht die Atmosphäre im Ofen aus Luft, d.h. 19-22 Vol. % Sauerstoff und 77- 79 Vol. % Stickstoff und unvermeidbaren Luftbestandteilen (z.B.: Edelgase).

Bei einer speziellen Ausführungsvariante erfolgt die Erwärmung in Schritt b) stufenweise in Bereichen mit unterschiedlicher Temperatur. Insbesondere erfolgt die Erwärmung in einem Rollenherdofen mit unterschiedlichen Heizzonen. Hierbei erfolgt die Erwärmung in einer ersten Heizzone mit einer Temperatur (sogenannte Ofeneinlauftemperatur) von mindestens 650 °C, bevorzugt mindestens 680 °C, insbesondere mindestens 720 °C. Maximal beträgt die Temperatur in der ersten Heizzone bevorzugt 900 °C, insbesondere maximal 850°C. Weiterhin bevorzugt beträgt die maximale Temperatur aller Heizzonen im Ofen maximal 1200 °C, insbesondere maximal 1000 °C, bevorzugt maximal 950 °C, besonders bevorzugt maximal 930 °C.

Die Gesamtzeit im Ofen $t_{Ofen}$, die sich aus einer Erwärmungszeit und einer Haltezeit zusammensetzt, beträgt bei beiden Varianten (konstante Ofentemperatur, stufenweise Erwärmung) bevorzugt mindestens 2 Minuten, insbesondere mindestens 3 Minuten, bevorzugt mindestens 4 Minuten. Weiterhin beträgt die Gesamtzeit im Ofen bei beiden Varianten bevorzugt maximal 20 Minuten, insbesondere maximal 15 Minuten, bevorzugt maximal 12 Minuten, insbesondere maximal 8 Minuten. Längere Gesamtzeiten im Ofen haben den Vorteil, dass eine gleichmäßige Austenitisierung des Blechzuschnittes sichergestellt ist. Andererseits führt ein zu langes Halten oberhalb von AC3 zu einer Kornvergröberung, die sich negativ auf die mechanischen Eigenschaften auswirkt.

Der so erwärmte Zuschnitt wird aus der jeweiligen Erwärmungseinrichtung, bei der es sich beispielsweise um einen konventionellen Erwärmungsofen, eine ebenso an sich bekannte Induktionserwärmungseinrichtung oder eine konventionelle Einrichtung zum Warmhalten von Stahlbauteilen handeln kann, entnommen und so schnell in das Umformwerkzeug transportiert, dass seine Temperatur beim Eintreffen in dem Werkzeug zumindest teilweise oberhalb von Ms+100 °C liegt, bevorzugt oberhalb von 600 °C, insbesondere oberhalb von 650 °C, besonders bevorzugt oberhalb von 700 °C. Hierbei bezeichnet Ms die Martensitstarttemperatur. Bei einer besonders bevorzugten Variante liegt die Temperatur zumindest teilweise oberhalb der AC1-Temperatur. Bei allen diesen Varianten beträgt die Temperatur insbesondere maximal 900 °C. Durch diese Temperaturbereiche wird insgesamt eine gute Umformbarkeit des Materials gewährleistet.

Im Arbeitsschritt c) wird der Transfer des austenitisierten Zuschnitts von der jeweils zum Einsatz kommenden Erwärmungseinrichtung zum Umformwerkzeug innerhalb von vorzugsweise höchstens 20 s, insbesondere von maximal 15 s absolviert. Ein derart schneller Transport ist erforderlich, um eine zu starke Abkühlung vor der Verformung zu vermeiden.

In Arbeitsschritt d) wird der Blechzuschnitt zu einem Blechformteil warmpressgeformt. Das Werkzeug besitzt beim Einlegen des Zuschnitts typischerweise eine Temperatur zwischen Raumtemperatur (RT) und 200 °C, bevorzugt zwischen 20 °C und 180 °C. Optional kann das Werkzeug in einer besonderen Ausführungsform zumindest bereichsweise auf eine Temperatur $T_{WZ}$ von mindestens 200 °C, insbesondere mindestens 300 °C temperiert sein, um das Bauteil nur partiell zu härten. Weiterhin beträgt die Werkzeugtemperatur $T_{WZ}$ bevorzugt maximal 600 °C, insbesondere maximal 550 °C. Es ist lediglich sicherzustellen, dass die Werkzeugtemperatur $T_{WZ}$ unterhalb der gewünschten Zieltemperatur $T_{Ziel}$ liegt. Der Blechzuschnitt wird in Schritt d) teilweise mehr als 30 K/s betragenden Abkühlgeschwindigkeit $r_{WZ}$ auf die Zieltemperatur $T_{Ziel}$ abgekühlt und optional dort gehalten wird. Die Verweilzeit im Werkzeug $t_{WZ}$ beträgt mehr als 1 s, bevorzugt mindestens 2s, insbesondere mindestens 3s, besonders bevorzugt mindestens 5s. Maximal beträgt die Verweilzeit im Werkzeug bevorzugt 25s, insbesondere maximal 20s.

Die Zieltemperatur $T_{Ziel}$ des Blechformteils liegt zumindest teilweise unterhalb 400 °C, bevorzugt unterhalb 300 °C, insbesondere unterhalb von 250 °C, bevorzugt unterhalb von 200 °C, besonders bevorzugt unterhalb von 180 °C, insbesondere unterhalb von 150 °C. Alternativ liegt die Zieltemperatur $T_{Ziel}$ des Blechformteils besonders bevorzugt unter Ms-50 °C, wobei Ms die Martensitstarttemperatur bezeichnet. Weiterhin beträgt die Zieltemperatur des Blechformteils bevorzugt mindestens 20 °C, besonders bevorzugt mindestens 50 °C.

Die aufgebrachte Aktivierungslösung auf das Stahlflachprodukt wirkt während des Warmpressformen als Umformhilfe.

In Arbeitsschritt e) wird das Blechformteil aus dem Werkzeug entnommen und auf Zieltemperatur abgekühlt.

Das erhaltene warmumgeformte Bauteil umfassend ein Stahlflachprodukt mit erfindungsgemäßer Zusammensetzung, einem Korrosionsschutzüberzug, wobei der Korrosionsschutzüberzug auf Aluminium-Basis ist und eine Legierungsschicht und eine Al-Basisschicht aufweist, und einer Oxidschicht gekennzeichnet dadurch, dass das umgeformte Stahlflachprodukt zumindest teilweise mit Metallphosphatkristallen, bevorzugt Zinkphosphatkristalle, bedeckt ist, die sich in oder auf der Oxidschicht befinden. Mit "in der Oxidschicht" ist hier gemeint, dass alle Flächen der Metallphosphatkristalle von der Oxidschicht umgeben sind. Mit "auf der Oberfläche" ist gemeint, dass mindestens eine Fläche der Metallphosphatkristallschicht nicht von der Oxidschicht umgeben ist.

Die Metallphosphatkristalle kristallisieren aus der aufgetragenen Aktivierungsschicht während des Warmumformerwärmungsschritts. In einer besonderen Ausführung handelt es sich hierbei um Zinkphosphatkristalle. In einer besonderen Ausführungsform haben die Metallphosphatkristalle auf der Korrosionsschutzoberfläche einen Bedeckungsgrad von mindestens 0,1 %, bevorzugt größer 5 %, besonders bevorzugt größer 10 % und am meisten bevorzugt größer 20 % vorhanden sein.

Außerdem können sich insbesondere in der Oxidschicht auch Phosphor, Natrium und Titan befinden. Durch die veränderte Oxidschicht verändert sich das Diffusionsverhalten in dem Korrosionsschutzüberzug während des Erwärmens des Blechzuschnittes.

In einer bevorzugten Ausführungsform befindet sich auf der Oberfläche nach der Warmumformung mindestens ein Phosphorgehalt von $\geq 1$ mg/m$^2$, bevorzugt $\geq 4$ mg/m$^2$, besonders bevorzugt $\geq 20$ mg/m$^2$. Ein zu hoher Phosphorgehalt kann dazu führen, dass sich zu große Phosphatkristalle auf der Oberfläche bilden. Daher sollte der Phosphorgehalt insbesondere $\leq 50$ mg/m$^2$ sein. In einer bevorzugten Ausführungsform soll nach der Warmumformung sich auf der Oberfläche ein Verhältnis von P $\geq 2$*Ti, insbesondere P $\geq 3$*Ti einstellen.

Durch die Aktivierungsschicht auf der Oberfläche des Stahlflachprodukts ändert sich der Schichtaufbau des Korrosionsschutzüberzuges. Insbesondere tritt durch die aufgebrachte Aktivierungslösung vor der Warmumformung eine Veränderung in der Al-Basisschicht nach der Warmumformung auf, die direkt unterhalb der Oxidschicht liegt. Die Veränderung in der Legierungsschicht ist dahingegen minimal. Bevorzugt sollte die Legierungsschicht nach der Warmumformung die gleiche Zusammensetzung wie vor der Warmumformung besitzen. Die Legierungsschicht nach der Warmumformung besteht aus mindestens 35 % Eisen. Der maximale Gehalt von Eisen in der Legierungsschicht beträgt 90 %, bevorzugt 55 %. Der Siliziumgehalt in der Legierungsschicht nach der Warmumformung beträgt mindestens 0,1 % und maximal 10 %. Optional kann die Legierungsschicht Magnesium enthalten. Der Gehalt von Magnesium sollte auf 0,5 % begrenzt sein, Als besonders vorteilhaft hat sich ein Magnesiumgehalt von mindestens 0,1 % herausgestellt. Des Weiteren besteht die Legierungsschicht nach der Warmumformung optional aus weiteren Bestandteilen, deren Gehalt höchstens 2,0 % beschränkt sind und als Rest Aluminium. Die optionalen weiteren Bestandteile beinhalten insbesondere die optionalen Bestandteile der Schmelze z.B.: Zink.

Durch die Applikation der Aktivierungslösung ändert sich der Schichtaufbau der Al-Basisschicht. Im Fall, dass die Warmumformung ohne Applikation einer Aktivierungslösung stattfindet, ist aus dem Stand der Technik ein fünf Schicht Aufbau aus Si-reichen und Si-armen Phasen bekannt. In der vorliegenden Erfindung ist die Si-reiche Phase diskreter. Unter diskreter ist zu verstehen, dass die Si-reichen Phasen nicht durchgängig sind.

In einer besonderen Ausführungsform ist das warmumgeformte Bauteil dadurch gekennzeichnet, dass die Legierungsschicht aus

$$Fe: \quad 35\text{-}90\ \%$$
$$Si: \quad 0{,}1\text{-}10\%$$

optional bis zu 0,5 % Mg
und optionalen weiteren Bestandteilen, deren Gehalte in Summe auf höchstens 2,0 % beschränkt sind, und als Rest Aluminium besteht
und die Al-Basisschicht siliziumarme und siliziumreiche Phasen umfasst, wobei für die Siliziumgehalte in den Phasen im Verhältnis zum Mittelwert des Siliziumgehaltes in de Al-Basisschicht $\overline{Si_{al}}$ gilt:

$$Si_{arm} < 0{,}8 * \overline{Si_{al}}$$

$$Si_{reich} > 1{,}2 * \overline{Si_{al}}$$

Insbesondere ist die siliziumarme Phase in der siliziumreichen Phase angeordnet. Die Durchgängigkeit der siliziumreichen Schicht kann nun bestimmt werden. In einer besonderen Ausführung bildet die siliziumreiche Phase höchstens eine 90 % durchgehende Schicht, bevorzugt 75 %, besonders bevorzugt 65 %, die von siliziumarmen Gebieten begrenzt ist.

Bei der Warmumformung bildet sich auf der Al-Basisschicht eine Oxidschicht. Bei dieser Oxidschicht handelt es sich um eine Mischung von verschiedenen Oxidtypen. Die gebildeten Oxide hängen von der Zusammensetzung des Korrosionsschutzüberzuges ab. Die benötigte freie Reaktionsenthalpie zur Bildung von typischen Al-Oxiden z.B. $Al_2O_3$ liegt bei den Temperaturen der Warmumformung unterhalb der von typischen Siliziumoxiden z.B.: $Si_2O_3$. Daher besteht ein Großteil der äußeren Oxidschicht aus Al-Oxiden. Diese entstehen durch die Diffusion von Aluminium an die Oberfläche, wo das Aluminium mit dem Sauerstoff aus der Umgebung reagiert. Die Bildung dieser Oxidschicht in der vorliegenden Erfindung ist durch den Phosphor auf der Oberfläche und die Bildung von Phosphaten während der Warmformung gestört. Dadurch kann ein geringer Anteil von Aluminium aus der Al-Basisschicht an die Oberfläche diffundieren und es verbleibt ein größerer Anteil an Aluminium in der Al-Basisschicht. Durch diesen erhöhten Anteil von Aluminium können sich die siliziumreichen Phasen keine kontinuierliche Schicht bilden, wie es aus dem Stand der Technik für warmumgeformte Bauteile ohne Aktivierungslösung bekannt ist.

Durch die nicht durchgehende Si-Phase ist sichergestellt, dass mehr Aluminium in der Al-Basisschicht verbleibt. Dadurch steht im Fall einer Beschädigung der Oberfläche des Bauteils mehr freies Aluminium in der Al-Basisschicht zur Verfügung. Dieses freie Aluminium diffundiert an die Oberfläche und bildet erneut eine externe Aluminiumoxidschicht und schützt somit das Bauteil gegen Korrosion.

In einer besonderen Ausführungsform kann das erhaltene Bauteil mit konventionellen Methoden noch weiter phosphatiert werden. In dem weiteren optionalen Phosphatierungsschritt des Bauteils können die Zinkphosphate auch als weitere Kristallisationskeime dienen. Dadurch wird es möglich eine dichtere Phosphatschicht auf der AS Oberfläche zu erreichen verglichen mit einem nicht erfindungsgemäßen Bauteil ohne aktiviertes Stahlflachprodukt. Ein nicht aktiviertes Stahlflachprodukt bildet auf der Oberfläche nach der Warmumformung eine dichte geschlossene Oxidschicht aus, so dass eine großflächige anschließende Phosphatierung kaum möglich ist. Im erfindungsgemäßen Gegenstand ist es hilfreich für eine gute anschließende Phosphatierung, wenn der Bedeckungsgrad mit Metallphosphatkristallen aus der Aktivierung möglichst hoch ist. Für die Bedeckung nach dem weiteren optionalen Phosphatierungsschritt können dann Bedeckungsgrade von größer 85 %, bevorzugt 95 %, besonders bevorzugt 98 % erreicht werden.

Nachfolgend wird die Erfindung anhand von Ausführungsbeispielen näher erläutert. Zur Erprobung der Erfindung wurde ein Stahlflachprodukt mit der Zusammensetzung in Tabelle 1 gewählt. Dieses Stahlflachprodukt wurde mit unterschiedlichen Korrosionsschutzüberzügen $\alpha$ bis $\epsilon$ mit Standardverfahren schmelztauchbeschichtet (s. Tabelle 2). Hier sind jeweils die Schmelzanalysen für die einzelnen Proben in Gewichtsprozent angegeben. Außerdem ist die Schichtdicke auf einer Seite angegeben.

Anschließend wurden die Proben mit verschiedenen Dressiergraden dressiert. Die Dressiergrade können Tabelle 3 entnommen werden. Optional wurden die Proben anschließend gereinigt (s. Tabelle 3).

Anschließend wurden auf die Proben eine Aktivierungslösung mittels Tauchens bei Raumtemperatur appliziert. Hierbei wurde die Aktivierungsbadkonzentration variiert. Es wurden die Aktivierungsparameter A bis G (s. Tabelle 3) gewählt. Bei der Variante G handelt es sich hierbei um ein Referenzbeispiel, das nicht erfindungsgemäß ist.

An den aktivierten Stahlflachprodukten und den Referenzbeispielen wurde die Oberflächenauflage mittels GD-OES im oberflächennahen Bereich (d.h.: in den obersten 500 nm) gemessen. Die gemessene Oberflächenauflage ist in Tabelle 4 dargestellt. Außerdem wurde mittels REM der Bedeckungsgrad bestimmt. Hierzu wird mindestens an 5 verschiedenen Positionen von der Oberfläche ein REM-Bild mit der Größe von 200 $\mu$m*150 $\mu$m aufgenommen und wie oben beschreiben der Bedeckungsgrad bestimmt. Der Bedeckungsgrad für die einzelnen Versuche ist ebenfalls in Tabelle 4 dargestellt.

Die so erzeugten Stahlflachprodukte wurden jeweils in 200×300 mm$^2$ große Blechzuschnitte abgeteilt. Diese Blechzuschnitte wurden warmumgeformt. Dafür wurden die Blechzuschnitte von Raumtemperatur auf eine Ofentemperatur erwärmt und über eine Gesamtzeit $t_{Ofen}$ erwärmt und gehalten. Die Ofentemperatur und die Gesamtzeit sind in Tabelle 5 angegeben. Die Aufheizgeschwindigkeit in dem Temperaturbereich 20° C bis 700° C in Abhängigkeit von der Blechdicke ist in Tabelle 5 angegeben. Hierbei ergeben sich je nach Aktivierungslösung unterschiedliche Werte.

Die so erwärmten Blechzuschnitte wurden anschließend mit einer Transferdauer von maximal 15 s in ein Umformwerkzeug eingelegt. Die Blechzuschnitte wiesen dabei zumindest teilweise eine Temperatur oberhalb Ms+100° C auf. Das Umformwerkezug war auf Raumtemperatur temperiert. In dem Umformwerkzeug wurden die Blechzuschnitte umgeformt. Anschließend wurden die umgeformten Blechzuschnitte innerhalb von 20 s auf Raumtemperatur abgekühlt und aus dem Werkzeug entnommen.

Die so warmumgeformten Bauteile wurden mittels GD-OES untersucht. Die Oberflächenauflage nach der Warmumformung ist in Tabelle 5 dargestellt. Außerdem wurde die Oberfläche des Bauteils mittels REM untersucht und bei den Aktivierungsvarianten A-F konnte eine teilweise Bedeckung der Oberfläche mit Metallphosphatkristallen festgestellt werden. Bei der Aktivierungsvariante G konnte kein Phosphor auf der Oberfläche detektiert werden.

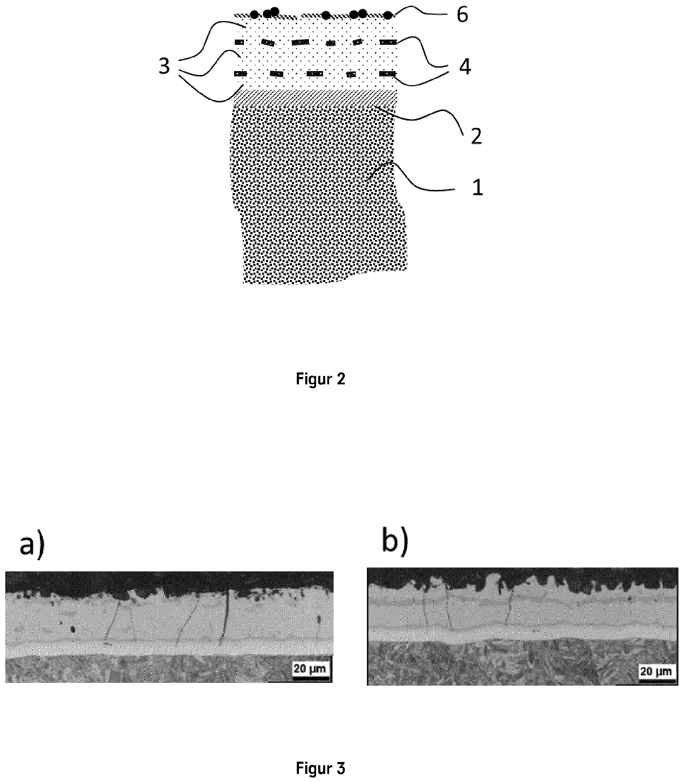

Für die hergestellten Proben wurde am Querschliff die Durchgängigkeit der Si-Phase mittels Rasterelektronenaufnahme bestimmt. Dazu wurde zunächst mit Energiedispersiver Röntgenspektroskopie die Phasen im Querschliff bestimmt. Beispielhaft zeigt Figur 3a den Querschliff von einer Probe nach Herstellungsvariante 3. Von unten nach oben ist auf der Rasterelektronenaufnahme das Stahlsubstrat, die Legierungsschicht, die dunklen Si-reichen Phasen in der helleren Al Basisschicht und eine dunkle Polymereinbettmaße zusehen. Beim Erstellen eines Querschliffes werden die Proben standardmäßig in handelsübliche Polymermasse eingebettet. Zur Bestimmung der Durchgängigkeit wurden noch zwei weitere REM Bilder aufgenommen, in allen 3 Bildern die Durchgängigkeit bestimmt und der Mittelwert gebildet. Für die Variante 3 ergibt sich hiermit eine Durchgängigkeit von 63 %. Als Referenzprobe dient die Herstellungsvariante 7, beispielhaft gezeigt in Figur 3b. Es wurde eine Durchgängigkeit von 95 % bestimmt.

Die Probenvarianten 4, 9, 19, 22, 25 und 35 wurden anschließend noch einem konventionellen Phosphatierungsschritt unterzogen. Die Phosphatierung der Probenvariante 35 diente hier als Referenzbeispiel. Für die Probenvarianten 4, 9, 19, 22, 25 konnte im REM ein Bedeckungsgrad von größer 85% festgestellt werden. Im Gegensatz dazu lag der Bedeckungsgrad des Gegenbeispiels 35 bei nur 75 %.

Die Warmumformbedingungen und die Aufheizeigenschaften (das Produkt aus Blechdicke und mittleren Aufheizgeschwindigkeiten zur Warmumformung im Temperaturbereich 20 °C bis 700 °C) während der Warmumformung sind in Tabelle 5 gezeigt.

**Tabelle 1 (Zusammensetzung Stahlsubstrat in Gew.-%)**

| Variante | C | Si | Mn | Al | Cr | Nb | Ti | B | P | S | Ni | Cu | Mo | V | Fe |
|---|---|---|---|---|---|---|---|---|---|---|---|---|---|---|---|
| a | 0,22 | 0,145 | 1,1 | 0,18 | 0,2 | 0,032 | 0,017 | 0,0024 | 0,004 | 0,0007 | 0,03 | 0,01 | 0,02 | 0,05 | Rest |

**Tabelle 2 (Korrosionsschutzüberzugsvarianten)**

| Korrosionsschutz-überzugs-variante | Schmelzanalyse | | | | | Schichtdicke (einseitig) [μm] |
|---|---|---|---|---|---|---|
| | Si | Fe | Mg | Sonstige | Al | |
| α | 8,9 | 3,1 | 0,3 | <1% | Rest | 10 |
| β | 8 | 3,5 | 0,5 | <1% | Rest | 40 |
| γ | 9,5 | 3,2 | <0,01 | <1% | Rest | 25 |
| δ | 8,2 | 3,8 | 0,25 | <1% | Rest | 27 |
| ε | 8,1 | 3,9 | <0,01 | <1% | Rest | 25 |

**Tabelle 3 (Aktivierungsvarianten)** (unterstrichene Variante ist ein Gegenbeispiel)

| Aktivierungsvariante | Probenreinigung vor Applikation Aktivierungslösung Schritt d) | Dressiergrad | Aktivierungsbad-konzentration |
|---|---|---|---|
| A | Ja | 0,7 | 16 g/l |
| B | Ja | 0,9 | 30 g/l |
| C | Ja | 0,8 | 50 g/l |
| D | Ja | 0,6 | 100 g/l |
| E | Nein | 0,8 | 75 g/l |
| F | Nein | 0,5 | 45 g/l |
| G | Ja | 0,7 | Keine Aktivierungslösung |

**Tabelle 4 (Stahlflachprodukt vor der Warmumformung)** (unterstrichene Variante ist ein Gegenbeispiel)

| Variante | Oberflächenveredelung | Aktivierung | Oberflächenauflage vor WU | | | Bedeckungsgrad |
|---|---|---|---|---|---|---|
| | Variante | Variante | Na [mg/m$^2$] | P [mg/m$^2$] | Ti [mg/m$^2$] | [%] |
| 1 | α | A | 3 | 5 | 1 | 45 |
| 2 | α | B | 5 | 8 | 1 | 58 |
| 3 | α | C | 8 | 14 | 2 | 71 |
| 4 | α | D | 16 | 28 | 4 | 88 |
| 5 | α | E | 12 | 21 | 3 | 66 |
| 6 | α | F | 7 | 12 | 2 | 75 |
| 7 | α | G | 0 | 0 | 0 | 0 |
| 8 | β | A | 4 | 5 | 2 | 44 |
| 9 | β | B | 4 | 8 | 2 | 60 |
| 10 | β | C | 8 | 13 | 2 | 70 |
| 11 | β | D | 16 | 27 | 4 | 85 |
| 12 | β | E | 11 | 22 | 3 | 65 |
| 13 | β | F | 6 | 12 | 2 | 78 |
| 14 | β | G | 0 | 0 | 0 | 0 |
| 15 | γ | A | 3 | 5 | 2 | 47 |
| 16 | γ | B | 5 | 9 | 1 | 58 |

(fortgesetzt)

| Variante | Oberflächenveredelung | Aktivierung | Oberflächenauflage vor WU | | | Bedeckungsgrad |
|----------|----------------------|-------------|---------------------------|---|---|----------------|
| | Variante | Variante | Na [mg/m²] | P [mg/m²] | Ti [mg/m²] | [%] |
| 17 | γ | C | 7 | 14 | 2 | 70 |
| 18 | γ | D | 17 | 28 | 4 | 90 |
| 19 | γ | E | 13 | 22 | 3 | 65 |
| 20 | γ | F | 7 | 13 | 1 | 75 |
| 21 | γ | G | 0 | 0 | 0 | 0 |
| 22 | δ | A | 3 | 4 | 1 | 45 |
| 23 | δ | B | 5 | 8 | 1 | 60 |
| 24 | δ | C | 7 | 14 | 2 | 70 |
| 25 | δ | D | 15 | 28 | 3 | 88 |
| 26 | δ | E | 12 | 21 | 3 | 65 |
| 27 | δ | F | 7 | 12 | 1 | 70 |
| 28 | δ | G | 0 | 0 | 0 | 0 |
| 29 | ε | A | 3 | 4 | 2 | 43 |
| 30 | ε | B | 5 | 7 | 2 | 60 |
| 31 | ε | C | 9 | 15 | 1 | 72 |
| 32 | ε | D | 16 | 29 | 3 | 85 |
| 33 | ε | E | 11 | 22 | 4 | 65 |
| 34 | ε | F | 6 | 13 | 1 | 80 |
| 35 | ε | G | 0 | 0 | 0 | 0 |

**Tabelle 5 (Stahlflachprodukt nach der Warmumformung)** (unterstrichene Variante ist ein Gegenbeispiel)

| Variante | Oberflächenveredelung | Aktivierung | Warm umformung | | Oberflächenauflage nach WU | | | Produkt aus mittlerer Aufheizgeschwindigkeit und Blechdicke [K*mm/s] von 20 bis 700 °C |
|---|---|---|---|---|---|---|---|---|
| | Variante | Variante | Ofen-temperatur | $t_{Ofen}$ [min] | Na [mg/m$^2$] | P [mg/m$^2$] | Ti[mg/m$^2$] | |
| 1 | α | A | 920 | 5 | 1 | 3 | 1 | 7,5 |
| 2 | α | B | 925 | 3 | 3 | 6 | 3 | 13,2 |
| 3 | α | C | 920 | 5 | 4 | 10 | 4 | 14,4 |
| 4 | α | D | 925 | 3 | 8 | 20 | 6 | 26 |
| 5 | α | E | 920 | 5 | 6 | 16 | 6 | 7,5 |
| 6 | α | F | 925 | 3 | 4 | 10 | 4 | 6 |
| 7 | α | G | 920 | 5 | 0 | 0 | 0 | 4,5 |
| 8 | β | A | 920 | 5 | 2 | 3 | 1 | 9 |
| 9 | β | B | 925 | 3 | 3 | 7 | 2 | 13,75 |
| 10 | β | C | 920 | 5 | 4 | 11 | 3 | 16 |
| 11 | β | D | 925 | 3 | 8 | 21 | 6 | 28 |
| 12 | β | E | 920 | 5 | 7 | 15 | 5 | 9 |
| 13 | β | F | 925 | 3 | 4 | 10 | 3 | 7,5 |
| 14 | β | G | 920 | 5 | 0 | 0 | 0 | 3,75 |
| 15 | γ | A | 920 | 5 | 2 | 3 | 2 | 12 |
| 16 | γ | B | 925 | 3 | 4 | 6 | 4 | 14,3 |
| 17 | γ | C | 920 | 5 | 3 | 10 | 4 | 16 |
| 18 | γ | D | 925 | 3 | 8 | 19 | 6 | 24 |
| 19 | γ | E | 920 | 5 | 7 | 15 | 6 | 9 |
| 20 | γ | F | 925 | 3 | 3 | 9 | 3 | 6 |
| 21 | γ | G | 920 | 5 | 0 | 0 | 0 | 4,5 |
| 22 | δ | A | 920 | 5 | 1 | 3 | 1 | 12 |
| 23 | δ | B | 925 | 3 | 2 | 7 | 3 | 14,3 |

(fortgesetzt)

| Variante | Oberflächenveredelung | Aktivierung | Warm umformung | | Oberflächenauflage nach WU | | | Produkt aus mittlerer Aufheizgeschwindigkeit und Blechdicke [K*mm/s] von 20 bis 700 °C |
|---|---|---|---|---|---|---|---|---|
| | Variante | Variante | Ofen-temperatur | $t_{Ofen}$ [min] | Na [mg/m$^2$] | P [mg/m$^2$] | Ti [mg/m$^2$] | |
| 24 | δ | C | 920 | 5 | 4 | 9 | 3 | 16 |
| 25 | δ | D | 925 | 3 | 7 | 21 | 7 | 26 |
| 26 | δ | E | 920 | 5 | 5 | 17 | 5 | 10,5 |
| 27 | δ | F | 925 | 3 | 4 | 10 | 3 | 12 |
| 28 | δ | G | 920 | 5 | 0 | 0 | 0 | 4,8 |
| 29 | ε | A | 920 | 5 | 1 | 3 | 2 | 15 |
| 30 | ε | B | 925 | 3 | 4 | 6 | 3 | 13,2 |
| 31 | ε | C | 920 | 5 | 3 | 11 | 4 | 19,2 |
| 32 | ε | D | 925 | 3 | 8 | 20 | 6 | 26 |
| 33 | ε | E | 920 | 5 | 5 | 17 | 6 | 9 |
| 34 | ε | F | 925 | 3 | 3 | 10 | 4 | 7,5 |
| 35 | ε | G | 920 | 5 | 0 | 0 | 0 | 4,05 |

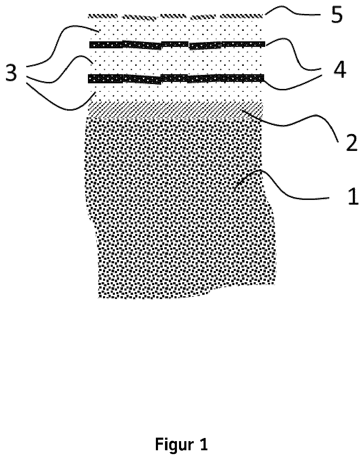

Die Erfindung wird nachfolgend anhand der Figuren näher erläutert. **Fig. 1** zeigt schematisch einen Querschnitt des warmumgeformten Bauteils ohne zuvor applizierte Aktivierungslösung. Die Figur soll als Referenz dienen. Auf dem Stahlsubstrat (1) befindet sich eine Legierungsschicht (2) und auf der Legierungsschicht die Al-Basisschicht (3) mit den Si-reichen Phasen (4). Die Si-reichen Phasen grenzen aneinander und dadurch bildet sich ein 5-lagiger Schichtaufbau bestehend aus Al-Basisschicht / Schicht aus Si-reichen Phasen / Al-Basisschicht / Schicht aus Si-reichen Phasen / Al-Basisschicht. Auf dem 5-lagigen Schichtaufbau befindet sich eine Oxidschicht (5).

**Fig. 2** zeigt schematisch das erfindungsgemäße, warmumgeformte Bauteil. Der Schichtaufbau zeigt ebenfalls die Legierungsschicht (2) auf dem Stahlsubstrat (1). Die Si-reichen Phasen (4) sind nicht miteinander verbunden und sind in der Al-Basisschicht (3) eingebettet. Auf der Oberfläche befindet sich eine Oxidschicht mit Phosphor (6).

In **Fig. 3** werden Rasterelektronenaufnahmen gezeigt von Querschliffen am warmumgeformten Bauteil. Die Ofentemperatur betrug 920 °C. Teil a) zeigt ein Bauteil, auf welches eine Aktivierungslösung mit einer Aktivierungsbadkonzentration von 50 g/l aufgebracht wurde. Von unten nach oben ist auf der Rasterelektronenaufnahme das Stahlsubstrat, die Legierungsschicht, die dunklen Si-reichen Phasen in der helleren Al Basisschicht und eine dunkle Polymereinbettmaße zusehen. Beim Erstellen eines Querschliffes werden die Proben standardmäßig in handelsübliche Polymermasse eingebettet. Die in **Fig. 2** schematisch gezeigte Oxidschicht ist in der Rasterelektronenaufnahme mit der gewählten Vergrößerung nicht auflösbar. Teil b) zeigte eine Referenzprobe ohne Aktivierungslösung. Hier ist der 5-lagige Schichtaufbau zu sehen bestehend aus Al-Basisschicht / Schicht aus Si-reichen Phasen / Al-Basisschicht / Schicht aus Si-reichen Phasen / Al-Basisschicht. Die Oxidschicht auf der Oberfläche ist ebenfalls bei der gewählten Vergrößerung nicht auflösbar.

**Patentansprüche**

1. Aktiviertes Stahlflachprodukt umfassend ein Stahlsubstrat und einen Korrosionsschutzüberzug, wobei das Stahlsubstrat neben Eisen und unvermeidbaren Verunreinigungen aus

| | |
|---|---|
| C: | 0,04 % - 0,45 % |
| Mn: | 0,5 % - 2,6 % |
| Si: | 0,02 % - 1,2 % |
| Al: | 0,02 - 1,0 % |
| P: | ≤ 0,05 % |
| S: | ≤ 0,02 % |

sowie optional einem oder mehreren der folgenden Elemente mit den Gehalten:

| | |
|---|---|
| Ti: | 0,01 % - 0,08 % |
| Nb: | 0,02 % - 0,08 % |
| B: | 0,001 % - 0,005 % |
| Cr: | 0,08 % bis zu 1,0 % |
| Mo: | ≤ 0,5 % |
| Ni: | ≤ 0,5 % |
| Cu: | ≤0,2 % |
| V: | ≤0,1 % |

besteht, und wobei der Korrosionsschutzüberzug auf Aluminium-Basis ist und eine Legierungsschicht und eine Al-Basisschicht aufweist **dadurch gekennzeichnet, dass** sich eine Aktivierungsschicht beinhaltend Phosphor, Natrium und Titan sich auf der Oberfläche befindet und für Ihre Gehalte gilt:

$P \geq 2xTi$
$P \geq Na$
$Ti \leq Na$

2. Aktiviertes Stahlflachprodukt nach Anspruch 1 **dadurch gekennzeichnet, dass** die Legierungsschicht aus

| | |
|---|---|
| Fe: | 35 %-90 % |

(fortgesetzt)

| Si: | 0,1%-10%, |
|---|---|

optional bis zu 0,5 % Mg und optionalen weiteren Bestandteilen, deren Gehalte in Summe auf höchstens 2,0 % beschränkt sind, und als Rest Aluminium besteht und die Al-Basisschicht aus

| Si: | 1,0-15 % |
|---|---|

und optional

| Fe: | 1-4 % |
|---|---|
| Mg: | bis zu 0,7% |
| Zn: | bis zu 15 % |

und optionalen weiteren Bestandteilen, deren Gehalte in Summe auf höchstens 2,0 % beschränkt sind, und als Rest Aluminium besteht.

3. Verfahren zum Herstellen eines aktivierten Stahlflachprodukts umfassend die folgenden Schritte:

a) Bereitstellen eines Stahlsubstrats mit der Zusammensetzung nach Anspruch 1;
b) Schmelztauchbeschichten des Stahlsubstrats mit einem Korrosionsschutzüberzug auf Aluminium-Basis, wobei der Korrosionsschutzüberzug eine Legierungsschicht und eine Al-Basisschicht aufweist;
c) Dressieren des Stahlflachproduktes;
d) Optionales Reinigen des Stahlflachproduktes;
e) Applizieren einer Aktivierungslösung auf das Stahlflachprodukt, bevorzugt tauchen, spritzen, sprühen oder Coil Coating.

4. Verfahren nach Anspruch 3 **dadurch gekennzeichnet, dass** die Aktivierungslösung einen pH-Wert >7 besitzt.

5. Verfahren nach einem der Ansprüche 4 oder 5 **dadurch gekennzeichnet, dass** die Aktivierungslösung eine Aktivierungspartikel umfassende wässrige Lösung ist, wobei der Anteil von Wasser im Lösungsmittel mindestens 95% beträgt.

6. Verfahren nach einem der Ansprüche 4 oder 5 **dadurch gekennzeichnet, dass** die Aktivierungslösung eine Aktivierungspartikel umfassende wässrige Lösung ist, wobei die Aktivierungspartikel Titanphosphat umfassen.

7. Verfahren nach einem der Ansprüche 4 bis 6 **dadurch gekennzeichnet, dass** die Aktivierungsbadkonzentration kleiner 100g/l ist.

8. Warmumgeformtes Bauteil umfassend ein Stahlflachprodukt mit der Zusammensetzung nach Anspruch 1, einem Korrosionsschutzüberzug, wobei der Korrosionsschutzüberzug auf Aluminium-Basis ist und eine Legierungsschicht und eine Al-Basisschicht aufweist, und einer Oxidschicht **dadurch gekennzeichnet, dass** das umgeformte Stahlflachprodukt zumindest teilweise mit Metallphosphatkristallen, bevorzugt Zinkphosphatkristalle, bedeckt ist, die sich in der Oxidschicht befinden.

9. Warmumgeformtes Bauteil nach Anspruch 8 **dadurch gekennzeichnet, dass** der Bedeckungsgrad mit Metallphosphatkristallen mindestens 0,1% beträgt.

10. Warmumgeformtes Bauteil einem der Ansprüchen 8 oder 9 **dadurch gekennzeichnet, dass** die Legierungsschicht aus

Fe: 35-90 %
Si: 0,1-10%
optional bis zu 0,5 % Mg
und optionalen weiteren Bestandteilen, deren Gehalte in Summe auf höchstens 2,0 % beschränkt sind, und als Rest Aluminium besteht

und die Al-Basisschicht siliziumarme und siliziumreiche Phasen umfasst, wobei für die Siliziumgehalte in den Phasen im Verhältnis zum Mittelwert des Siliziumgehaltes in de Al-Basisschicht $\overline{Si_{al}}$ gilt:

$$Si_{arm} < 0{,}8 * \overline{Si_{al}}$$

$$Si_{reich} > 1{,}2 * \overline{Si_{al}}$$

11. Warmumgeformtes Bauteil nach einem der Ansprüche 8 bis 10 **dadurch gekennzeichnet, dass** die siliziumreichen Phasen innerhalb der siliziumarmen Phase angeordnet sind und/oder die siliziumreichen Phasen höchstens eine 90% durchgehende Schicht, die von siliziumarmen Gebieten begrenzt ist, bilden.

12. Warmumgeformtes Bauteil nach den Ansprüchen 8 bis 11 **dadurch gekennzeichnet, dass** Phosphor sich in Gehalten von $\geq 1$ mg/m$^2$ auf der Oberfläche befindet.

13. Verfahren zum Herstellen eines warmumgeformten Bauteils:

a) Bereitstellen eines Blechzuschnitts aus einem Stahlflachprodukt nach Anspruch 1;
b) Erwärmen des Blechzuschnitts derart, dass zumindest teilweise die AC3 Temperatur des Zuschnitts überschritten ist und die Temperatur $T_{Einlg}$ des Zuschnitts beim Einlegen in ein für ein Warmpressformen vorgesehenes Umformwerkzeug (Arbeitsschritt c)) zumindest teilweise eine Temperatur oberhalb von Ms+100°C aufweist, wobei Ms die der Martensitstarttemperatur bezeichnet;
c) Einlegen des erwärmten Blechzuschnitts in ein Umformwerkzeug, wobei die für das Entnehmen aus der Erwärmungseinrichtung und das Einlegen des Zuschnitts benötigte Transferdauer $t_{Trans}$ höchstens 20 s, bevorzugt höchstens 15 s, beträgt;
d) Warmpressformen des Blechzuschnitts zu dem Blechformteil, wobei der Zuschnitt im Zuge des Warmpressformens über eine Dauer $t_{WZ}$ von mehr als 1 s mit einer zumindest teilweise mehr als 30 K/s betragenden Abkühlgeschwindigkeit $r_{WZ}$ auf die Zieltemperatur $T_{Ziel}$ abgekühlt und optional dort gehalten wird;
e) Entnehmen des auf die Zieltemperatur abgekühlten Blechformteils aus dem Werkzeug.

14. Verfahren nach Anspruch 13 **dadurch gekennzeichnet, dass** in Schritt b) in dem Temperaturbereich 20° C bis 700 °C das Produkt aus mittlerer Aufheizgeschwindigkeit und Blechdicke größer gleich 5 (K*mm)/s ist.

15. Verfahren nach Anspruch 14 **dadurch gekennzeichnet, dass** nach dem Warmumformen ein Phosphatierungsschritt folgt.

Figur 1

Figur 2

a)

b)

Figur 3

**Europäisches Patentamt**
**European Patent Office**
**Office européen des brevets**

## EUROPÄISCHER RECHERCHENBERICHT

Nummer der Anmeldung

EP 22 19 6330

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 0 454 211 A1 (METALLGESELLSCHAFT AG [DE]; PARKER STE CONTINENTALE [FR]) 30. Oktober 1991 (1991-10-30) * Seite 3, Zeile 23 – Zeile 29 * * Beispiel 1 * * Seite 5, Zeile 11 – Zeile 45 * ----- | 1-15 | INV. C23C22/12 C23C22/62 C23C22/78 C22C38/02 C22C38/04 C22C38/06 |
| Y | DE 10 2019 128238 A1 (THYSSENKRUPP STEEL EUROPE AG [DE]) 22. April 2021 (2021-04-22) * Absätze [0012], [0018] * ----- | 1-15 | |
| X | WO 2021/235083 A1 (NIPPON STEEL CORP [JP]) 25. November 2021 (2021-11-25) * Absatz [0069] – Absatz [0072] * ----- | 3-7 | |
| A | US 2017/029954 A1 (JUNGE FABIAN [DE] ET AL) 2. Februar 2017 (2017-02-02) * das ganze Dokument * ----- | 1-15 | |

**RECHERCHIERTE SACHGEBIETE (IPC)**

C23C
C22C

Der vorliegende Recherchenbericht wurde für alle Patentansprüche erstellt

| Recherchenort | Abschlußdatum der Recherche | Prüfer |
|---|---|---|
| Den Haag | 8. März 2023 | Fodor, Anna |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 19 6330

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-03-2023

| Im Recherchenbericht angeführtes Patentdokument | Datum der Veröffentlichung | Mitglied(er) der Patentfamilie | Datum der Veröffentlichung |
|---|---|---|---|
| EP 0454211 A1 | 30-10-1991 | AT 107711 T | 15-07-1994 |
| | | BR 9101616 A | 10-12-1991 |
| | | CA 2040859 A1 | 22-10-1991 |
| | | CA 2040872 A1 | 22-10-1991 |
| | | DE 4012795 A1 | 24-10-1991 |
| | | EP 0454211 A1 | 30-10-1991 |
| | | ES 2055518 T3 | 16-08-1994 |
| | | JP 3063921 B2 | 12-07-2000 |
| | | JP H04254589 A | 09-09-1992 |
| | | US 5160551 A | 03-11-1992 |
| | | ZA 912943 B | 30-12-1992 |
| DE 102019128238 A1 | 22-04-2021 | DE 102019128238 A1 | 22-04-2021 |
| | | EP 4045314 A1 | 24-08-2022 |
| | | WO 2021074388 A1 | 22-04-2021 |
| WO 2021235083 A1 | 25-11-2021 | CN 115443350 A | 06-12-2022 |
| | | EP 4155427 A1 | 29-03-2023 |
| | | JP WO2021235083 A1 | 25-11-2021 |
| | | KR 20220156925 A | 28-11-2022 |
| | | WO 2021235083 A1 | 25-11-2021 |
| US 2017029954 A1 | 02-02-2017 | CN 106471157 A | 01-03-2017 |
| | | DE 102014105226 A1 | 15-10-2015 |
| | | EP 3129525 A2 | 15-02-2017 |
| | | JP 6626000 B2 | 25-12-2019 |
| | | JP 2017510709 A | 13-04-2017 |
| | | KR 20160145080 A | 19-12-2016 |
| | | US 2017029954 A1 | 02-02-2017 |
| | | WO 2015155163 A2 | 15-10-2015 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015036151 A1

- WO 2012120081 A

**In der Beschreibung aufgeführte Nicht-Patentliteratur**

- **BRANDIS H.** *TEW-Techn. Ber.,* 1975, vol. 1, 8-10